Europäisches Patentamt

European Patent Office

Office européen des brevets

(19)

(11) **EP 1 241 473 A1**

(12) **EUROPÄISCHE PATENTANMELDUNG**

(43) Veröffentlichungstag:
**18.09.2002  Patentblatt 2002/38**

(51) Int Cl.⁷: **G01N 27/90**

(21) Anmeldenummer: **01106705.5**

(22) Anmeldetag: **16.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Beck, Thomas**
  **16341 Zepernick (DE)**
• **Reiche, Ralph**
  **13409 Berlin (DE)**
• **Wilkenhöner, Rolf, Dr.**
  **10589 Berlin (DE)**

(54) **Verfahren zur zerstörungsfreien Prüfung carbidhaltiger Legierungen sowie zur Herstellung einer Gasturbinenschaufel**

(57)    Verfahren zur zerstörungsfreien Prüfung carbidhaltiger Legierungen sowie zur Herstellung einer Gasturbinenschaufel

Die Erfindung betrifft ein Verfahren zur zerstörungsfreien Prüfung einer Gasturbinenschaufel (1) aus einer carbidhaltigen Legierung, bei dem mittels einer Wirbelstrommessung oberflächennahe Oxidbereiche (9) oxidierter Carbide ermittelt werden. Hierdurch kann insbesondere bereits vor einem aufwendigen Reinigungs- und Beschichtungsprozess der Gasturbinenschaufel ein Abschleifen bzw. Aussondern der Schaufeln erfolgen.

FIG 1

EP 1 241 473 A1

**Beschreibung**

Die Erfindung betrifft ein Verfahren zur zerstörungsfreien Prüfung carbidhaltiger Legierungen. Die Erfindung betrifft auch ein Verfahren zur zerstörungsfreien Prüfung einer Gasturbinenschaufel aus einer carbidhaltigen Legierung. Die Erfindung betrifft weiterhin ein Verfahren zur Herstellung einer Gasturbinenschaufel, bei dem ein Grundkörper der Gasturbinenschaufel gegossen, die Oberfläche des Grundkörpers für das Aufbringen einer Korrosionsschutzschicht gereinigt und aktiviert und anschließend die Korrosionsschutzschicht aufgebracht wird.

In dem Buch von H. Blumenauer "Werkstoffprüfung", 5. Aufl., VEB Deutscher Verlag für Grundstoffindustrie, Leipzig 1989, ist die zerstörungsfreie Werkstoffprüfung mit dem Wirbelstromverfahren beschrieben. Es beruht darauf, dass das elektromagnetische Wechselfeld einer von Wechselstrom durchflossenen Spule verändert wird, wenn eine metallische Probe in ihren Wirkungsbereich gebracht wird. Durch das Primärfeld der Spule wird in der zu untersuchenden Probe eine Wechselspannung induziert, die ihrerseits einen Wechselstrom erzeugt, der seinerseits wiederum ein magnetisches Wechselfeld erzeugt. Dieses sekundäre Wechselfeld wirkt charakteristischerweise dem Primärfeld entgegen und verändert somit seine Parameter. Die Veränderung läßt sich messtechnisch erfassen. Dazu wird beispielsweise bei Spulen mit Primär- und Sekundärwicklung die Sekundärspannung gemessen (transformatorisches Prinzip). Oder es wird, beispielsweise bei Spulen mit nur einer Wicklung, deren Scheinwiderstand ermittelt (parametrisches Prinzip). Gemäß der in einem Wechselstromkreis geltenden Gesetze wird durch die Induktion in der Spule und in der Probe bei der parametrischen Anordnung außer dem Ohm'schen Widerstand noch ein induktiver Widerstand erzeugt und bei der transformatorischen Anordnung außer der realen Messspannung noch eine imaginäre Messspannung erzeugt. Beide Anteil werden in komplexer Form in der Scheinwiderstandsebene bzw. der komplexen Spannungsebene dargestellt. In diesen beiden Beispielen macht sich die zerstörungsfreie Werkstoffprüfung den Effekt zu Nutze, dass die Veränderungen des Primärfeldes von den physikalischen und geometrischen Probeneigenschaften sowie den Geräteeigenschaften abhängen. Geräteeigenschaften sind u.a. die Frequenz, die Stromstärke, die Spannung und die Windungszahl der Spule. Probeneigenschaften sind u.a. elektrische Leitfähigkeit, Permeabilität, Probenform sowie Werkstoffinhomogenitäten im Bereich der Wirbelströme. Neuere Geräte zur induktiven Prüfung erlauben Messungen bei mehreren Anregungsfrequenzen. Dazu kann beispielsweise die Frequenz während einer Messung automatisch verändert werden, oder die Frequenz wird vom Benutzer während zweier Messungen manuell verstellt. Die Frequenz hat eine wesentlichen Einfluß auf die Eindringtiefe der Wirbelströme. Es gilt näherungsweise:

$$\delta = \frac{503}{\sqrt{f \cdot \sigma \cdot \mu_r}}$$

$\delta$ [mm] Eindringtiefe,
f [Hz] Frequenz,
$\sigma$ [MS/m = m/($\Omega$mm$^2$)] spezifische Leitfähigkeit,
$\mu_r$ relative Permeabilität.

Die Standardeindringtiefe verringert sich mit wachsender Frequenz.

In dem Artikel "Non-Destructive Testing of Corrosion Effect on High Temperature Protective Coatings" von G. Dibelius, H.J. Krischel und U. Reimann, VGB Kraftwerkstechnik 70 (1990), Nr. 9, ist eine zerstörungsfreie Prüfung von Korrosionsprozessen in Schutzschichten von Gasturbinenschaufeln beschrieben. Eine Messmethode bei Nickel-basierten Schutzschichten ist die Messung der magnetischen Permeabilität aufgrund eines sich im Korrosionsprozess ändernden Ferromagnetismus in der Schutzschicht. Für den Fall eines Platin-Aluminium-Schutzschichtsystems wird die Möglichkeit der Wirbelstrommessung diskutiert. Aufgrund der gemessenen Signalhöhen kann auf eine Schichtdicke der Schutzschicht geschlossen werden.

In dem Artikel "How to cast Cobalt-Based Superalloys" von M.J. Woulds in: Precision Metal, April 1969, S. 46, sowie in dem Artikel von M.J. Woulds und T.R. Cass, "Recent Developments in MAR-M Alloy 509", Cobalt, Nr. 42, Seiten 3 bis 13, ist beschrieben, dass es beim Gießen von Bauteilen wie auch Gasturbinenschaufeln zur Reaktion der erstarrenden oder bereits erstarrten Bauteiloberfläche mit dem Material der Gussschale kommen kann. Dabei kann es z.B. zur Oxidation von Carbiden im Gussbauteil kommen. Ein solcher Vorgang wird hier weiterhin als "Inner Carbide Oxidation", ICO, bezeichnet. Die Entstehung von ICO hat einen Abbau von die Korngrenzen einer Legierung verstärkenden Carbide zur Folge. Insbesondere im oberflächennahen Bereich einer Gasturbinenschaufel kann dies zu einer erheblichen Materialschwächung führen. Die Legierungen werden üblicherweise im Vakuumguss vergossen. Der zur Oxidation erforderliche Sauerstoff kommt aus dem Material der Gussschale, z.B. Siliciumdioxid, Zirkondioxid oder Aluminiumoxid. Dadurch entstehen Oxidphasen auf den Korngrenzen. Die ursprünglichen Carbide werden beispielsweise zu Zirkon-, Titan- oder Tantal-reichen Oxiden transformiert. Die Tiefe des Bereichs, der oxidierte Carbide enthält, ist von Parametern abhängig, wie dem Kohlenstoffgehalt in der Legierung, der Zusammensetzung von Gussschalenmaterial und Gusslegierung oder auch der Abkühlgeschwindigkeit. Typischerweise kann eine solche oxidhaltige Schicht etwa 100 bis 300 µm dick sein. Für eine Qualitätskontrolle ist es wünschenswert, die die mechanischen Eigenschaften beeinträchtigenden Oxidbereiche oxidierter Carbide nachweisen zu können. Zerstörungsfrei ist dies bisher nicht möglich.

Aufgabe der Erfindung ist die Angabe eines Verfahrens zur zerstörungsfreien Prüfung carbidhaltiger Legierungen, bei dem oberflächennahe Oxidbereiche oxidierter Carbide ermittelt werden können. Weitere Aufgabe der Erfindung ist die Angabe eines Verfahrens zur zerstörungsfreien Prüfung einer Gasturbinenschaufel aus einer carbidhaltigen Legierung. Weiterhin ist es Aufgabe der Erfindung, ein Verfahren zur Herstellung einer Gasturbinenschaufel anzugeben, bei dem auf einen Grundkörper der Gasturbinenschaufel eine Korrosionsschutzschicht aufgebracht wird, wobei Qualität und Lebensdauer der Korrosionsschutzschicht besonders hoch sind.

Die auf ein Verfahren zur Prüfung carbidhaltiger Legierungen gerichtete Aufgabe wird erfindungsgemäß gelöst durch Angabe eines Verfahrens zur zerstörungsfreien Prüfung carbidhaltiger Legierungen, bei dem mittels einer Wirbelstrommessung oberflächennahe Oxidbereiche oxidierter Carbide ermittelt werden.

Es hat sich überraschenderweise herausgestellt, dass die Oxidbereiche oxidierter Carbide (ICO, siehe oben) mit hinreichender Genauigkeit über eine Wirbelstrommessung nachgewiesen werden können. Eine solche Wirbelstrommessung beruht, wie oben ausgeführt, insbesondere auf der vom Grundmaterial verschiedenen elektrischen Leitfähigkeit innerhalb der ICO-Bereiche. Versuche konnten weiterhin belegen, dass die Empfindlichkeit des Verfahrens sogar ausreicht, eine Bestimmung der Tiefe der vorliegenden ICO-haltigen Schichten zu bestimmen. Wie oben ausgeführt, sind dazu Wirbelstrommessungen bei unterschiedlichen Anregungsfrequenzen nötig. Bei geeignet tiefen Frequenzen ist die Wirbelstromausbreitung in der ICO-haltigen Schicht zu vernachlässigen, so dass die Messung nur durch die Eigenschaften des Grundwerkstoffes bestimmt wird. In einem Übergangsbereich wird die Änderung des Primärfeldes durch die Wirbelströme sowohl im ungestörten Grundwerkstoff als auch in der ICO-haltigen Schicht bedingt. Ab einer gewissen Frequenzhöhe breitet sich das Wirbelstromfeld nur in der ICO-haltigen Schicht aus. Es tritt demzufolge ein definierter Übergang in der Messgröße (z.B. Leitfähigkeit oder Permeabilität) als Funktion der Anregungsfrequenz auf. Durch Korrelation der Frequenz, bei welcher der Einfluß der ICO-haltigen Schicht überwiegt, mit der Eindringtiefe des Wirbelstromfeldes läßt sich die Dicke der ICO-haltigen Schicht bestimmen.

Erfindungsgemäß wird die auf ein Verfahren zur zerstörungsfreien Prüfung einer Gasturbinenschaufel gerichtete Aufgabe gelöst durch Angabe eines Verfahrens zur zerstörungsfreien Prüfung einer Gasturbinenschaufel aus einer carbidhaltigen Legierung, bei dem mittels einer Wirbelstrommessung oberflächennahe Oxidbereiche oxidierter Carbide ermittelt werden.

Gerade bei einer Gasturbinenschaufel kommt es aufgrund der sowohl hohen thermischen als auch mechanischen Belastungen in besonderem Maße auf ein fehlerfreies Gefüge des Grundwerkstoffs an. Gerade in diesem Bereich ist also eine Qualitätsüberprüfung hinsichtlich ICO-haltiger Bereiche von großem Wert.

Vorzugsweise ist die Legierung eine Nickel- oder Kobaltbasis-Superlegierung. Solche Superlegierungen sind im Gasturbinenbau bestens bekannt und zeichnen sich insbesondere durch eine besondere Hochwarmfestigkeit aus. Gerade solche Superlegierungen neigen aber dazu, beim Gießen mit dem Sauerstoff der Gussform zu reagieren und dabei die erwähnten ICO-Bereiche zu bilden.

Erfindungsgemäß wird die auf ein Herstellungsverfahren gerichtete Aufgabe gelöst durch ein Verfahren zur Herstellung einer Gasturbinenschaufel, bei dem ein Grundkörper der Gasturbinenschaufel gegossen, die Oberfläche des Grundkörpers für das Aufbringen einer Korrosionsschutzschicht gereinigt und aktiviert und anschließend die Korrosionsschutzschicht aufgebracht wird, wobei nach dem Gießen und vor der Reinigung und Aktivierung mittels einer Wirbelstrommessung die Oberfläche auf das Vorhandensein von Oxidbereichen oxidierter Carbide untersucht wird.

Bei Gasturbinenschaufeln kommen häufig Korrosionsschutzschichten zum Einsatz, die auf einen Grundkörper aufgebracht werden. Der Grundkörper ist dabei vorzugsweise aus einer Nickel- oder Kobaltbasis-Superlegierung gebildet. Weiter bevorzugt besteht die Schutzschicht aus einer Legierung der Art MCrAlY, wobei M ausgewählt ist aus der Gruppe (Eisen, Kobalt, Nikkel), Cr Chrom, Al Aluminium und Yttrium ausgewählt ist aus der Gruppe (Yttrium, Lanthan, Seltene Erden). Eine solche Schutzschicht erfordert eine Vorbehandlung der Oberfläche des Grundkörpers um eine dauerhafte Haftung zwischen dem Grundkörper und der Schutzschicht zu gewährleisten. Ein geeigneter Reinigungsprozess, der gleichzeitig die Oberfläche für die gute Verbindung mit der Schutzschicht aktiviert, ist ein Sputter-Prozess, bei dem Ionen auf die Grundkörperoberfläche beschleunigt werden und die Oberfläche dabei über ihre kinetische Energie reinigen und aktivieren. Versuche haben nun ergeben, dass ICO-Bereiche in der Oberflächenschicht eine geeignete Reinigung und Aktivierung der Grundkörperoberfläche verhindern. Die ICO-Bereiche können durch den Sputter-Prozess nicht abgetragen werden. Sie werden regelrecht freigelegt, weil Metall oder Verunreinigungen, die sie zum Teil verdeckt haben, bevorzugt abgetragen werden, nicht aber die Oxide selbst. Dies führt zu einer wesentlichen Beeinträchtigung der Haftung der Schutzschicht auf dem Schaufelgrundkörper.

Um bereits vor dem aufwendigen Reinigungs- und Beschichtungsprozess bei einer Gasturbinenschaufel eine Aussage treffen zu können, ob ICO-haltige Bereiche an der Oberfläche des Grundkörpers vorhanden sind, wird die Wirbelstrommessung eingesetzt. Hierdurch ist man nun erstmals in der Lage, kostengünstig bereits im Vorfeld die Schaufeln mit ICO-haltigen Bereichen über einen Schleifprozess zu reinigen oder bereits im Vorfeld auszusondern. Erfolgreich gereinigte Schaufeln oder von vorn herein nicht ICO-Bereich belastete Schaufeln werden sodann mit der Schutzschicht versehen, was vorzugsweise durch ein Plasmaspritzen geschieht.

Die Zusammensetzung der Grundkörper-Superlegierung ist bevorzugt wie folgt (Angaben in Gewichtsprozenten) :

24% Chrom, 10% Nickel, 7% Wolfram, 3,5% Tantal, 0,2% Titan, 0,5% Zirkon, 0,6% Kohlenstoff und der Rest Kobalt. Diese Legierung wird auch unter dem Handelsnamen MAR-M 509 geführt.

Die Erfindung wird anhand der Zeichnung beispielhaft näher erläutert. Es zeigen teilweise schematisch und nicht maßstäblich:

FIG 1     ein Verfahren zur Prüfung einer Gasturbinenschaufel auf ICO-Bereiche,

FIG 2     eine Gasturbinenschaufel mit sichtbaren ICO-Bereichen,

FIG 3     einen Teil eines Längsschnittes durch den Grundkörper einer Gasturbinenschaufel mit einer ICO-Schicht, und

FIG 4     ein Diagramm zur frequenzabhängigen effektiven Leitfähigkeit von Proben mit und ohne ICO-Bereichen.

Gleiche Bezugszeichen haben in den verschiedenen Figuren die gleiche Bedeutung.

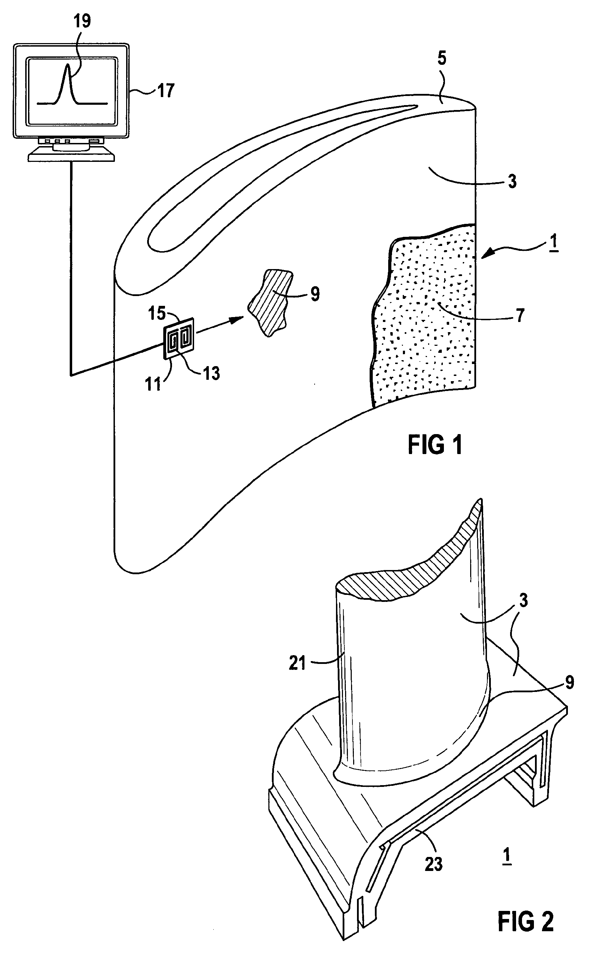

Figur 1 zeigt schematisch ein Verfahren zur zerstörungsfreien Prüfung einer Gasturbinenschaufel 1 mittels eines Wirbelstromprüfverfahrens. Die Gasturbinenschaufel 1 weist einen Grundkörper 5 auf. Der Grundkörper 5 weist eine Oberfläche 3 auf. Auf der Oberfläche 3 ist in einem Teilbereich eine Schutzschicht 7 aufgebracht, welche der Vollständigkeit halber in Figur 1 aufgenommen wurde, obwohl das Aufbringen dieser Schutzschicht 7 erst nach einer erfolgten Wirbelstromprüfung durchgeführt wird. In der Oberfläche 3 ist ein Oxidbereich 9 oxidierter Carbide durch eine Reaktion mit einer nicht dargestellten Formschale im Gussprozess beim Abgießen der Gasturbinenschaufel 1 entstanden. Durch Reaktion mit Sauerstoff aus dieser Formschale haben sich in diesem Oxidbereich 9 Carbide in Oxide umgewandelt. Dies führt einerseits dazu, dass die Festigkeit des Grundkörpermaterials in diesem Bereich herabgesetzt ist, da die die Korngrenzen verfestigende Wirkung der Carbide entfällt. Weiterhin hat dies zur Folge, dass ein vor dem Aufbringen der Schutzschicht 7 erfolgender Reinigungs- und Aktivierungsprozess mittels eines Sputterns im Oxidbereich 9 ohne Wirkung bleibt. Hierdurch wird die Haftung der Schutzschicht 7 auf dem Grundkörper 5 erheblich beeinträchtigt. Um bereits vor dem aufwendigen Reinigungs- und Beschichtungsprozess störende Oxidbereiche 9 zu ermitteln, wird ein Wirbelstrommessverfahren angewandt. Hierzu wird eine Wirbelstromsonde 11 über die Oberfläche 3 geführt. Auf einem flexiblen Kunststoffträger 15 sind elektrische Spulen 13 angeordnet, durch die mittels eines Wechselstroms durch die Spulen 13 ein magnetisches Feld erzeugt wird. Dieses induziert in der Oberfläche 3 elektrische Ströme, die wiederum über ihr Magnetfeld in die Spulen 13 zurückkoppeln. Dies wird als Signal 19 in einer Auswerteeinheit 17 sichtbar, die mit der Wirbelstormsonde 11 verbunden ist. Abhängig insbesondere von der elektrischen Leitfähigkeit, aber auch von der magnetischen Permeabilität des Materials im Bereich der Wirbelstromsonde 11 ergibt sich ein unterschiedlich starkes Signal 19. Durch eine unterschiedliche elektrische Leitfähigkeit und magnetische Suszeptibilität in dem Oxidbereich 9 ist dieser mittels der Wirbelstromsonde 11 detektierbar. Darüber hinaus kann durch eine Frequenzveränderung im Wechselfeld der Wirbelstromsonde 11 eine Tiefenbestimmung für den Oxidbereich 9 durchgeführt werden. Somit ist es erstmals möglich, zerstörungsfrei Oxidbereiche (ICO) 9 nachzuweisen. Dies hat insbesondere erhebliche Kostenvorteile als Konsequenz, da die Schaufeln bereits vor einem aufwendigen Reinigungs- und Beschichtungsprozess sauber geschliffen bzw. ausgesondert werden können.

Figur 2 zeigt nach einem Reinigungs- und Aktivierungsprozess mittels Sputtern sichtbar gewordene ICO-Bereiche 9 bei einer Gasturbinenschaufel 1. Die ICO-Bereiche 9 sind hier insbesondere konzentriert in einem Übergangsbereich zwischen dem Schaufelblatt 21 und dem Befestigungsbereich 23.

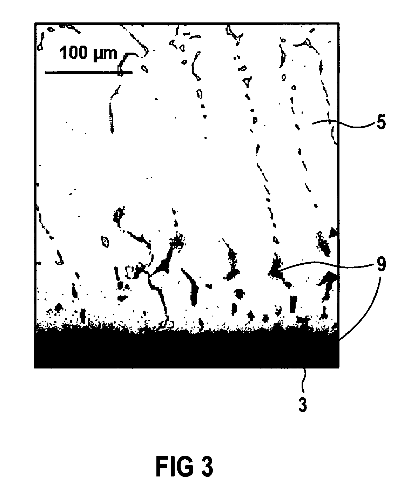

In Figur 3 ist in einem Längsschnitt die Ausbildung eines ICO-Bereichs 9 an der Oberfläche 3 eines Grundkörpers 5 dargestellt. Der Grundkörper 5 besteht aus der oben genannten MAR-M 509 Kobaltbasis-Superlegierung. Die Dicke der ICO-Schicht liegt bei ca. 100 μm.

**Patentansprüche**

1.   Verfahren zur zerstörungsfreien Prüfung carbidhaltiger Legierungen, bei dem mittels einer Wirbelstrommessung oberflächennahe Oxidbereiche (9) oxidierter Carbide ermittelt werden.

2.   Verfahren zur zerstörungsfreien Prüfung einer Gasturbinenschaufel (1) aus einer carbidhaltigen Legierung, bei dem mittels einer Wirbelstrommessung oberflächennahe Oxidbereiche (9) oxidierter Carbide ermittelt werden.

3.   Verfahren nach Anspruch 2, bei dem die Legierung eine Nickel- oder Kobaltbasis-Superlegierung ist.

4.  Verfahren zur Herstellung einer Gasturbinenschaufel (1),
    bei dem ein Grundkörper (5) der Gasturbinenschaufel (1) gegossen, die Oberfläche (3) des Grundkörpers (5) für das Aufbringen einer Korrosionsschutzschicht (7) gereinigt und aktiviert und anschließend die Korrosionsschutzschicht (7) aufgebracht wird, wobei nach dem Gießen und vor der Reinigung und Aktivierung mittels einer Wirbelstrommessung die Oberfläche auf das Vorhandensein von Oxidbereichen oxidierter Carbide untersucht wird.

5.  Verfahren nach Anspruch 4, bei dem der Grundkörper (5) aus einer Nickel- oder Kobaltbasis-Superlegierung besteht.

6.  Verfahren nach Anspruch 5,
    bei dem die Schutzschicht (7) aus einer Legierung der Art MCrAlY besteht, wobei M ausgewählt ist aus der Gruppe (Fe, Co, Ni), Cr Chrom, Al Aluminium und Y ausgewählt ist aus der Gruppe (Y, La, Seltene Erde).

FIG 1

FIG 2

100 µm

5

9

3

**FIG 3**

Europäisches
Patentamt

**EUROPÄISCHER RECHERCHENBERICHT**

Nummer der Anmeldung

EP 01 10 6705

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 853 634 A (TOERNBLOM BENGT H) 1. August 1989 (1989-08-01) * Zusammenfassung * * Spalte 7, Zeile 22 – Zeile 43; Abbildung 4 * | 1,2 | G01N27/90 |
| A | GB 2 124 772 A (GEN ELECTRIC) 22. Februar 1984 (1984-02-22) * Zusammenfassung * * Seite 1, Zeile 80 – Seite 2, Zeile 21; Abbildung 3 * | 1-6 | |
| A | US 3 544 890 A (BRIDGES JACK E ET AL) 1. Dezember 1970 (1970-12-01) * Zusammenfassung * * Spalte 2, Zeile 19 – Zeile 39; Abbildung 2 * | 1-6 | |

| | RECHERCHIERTE SACHGEBIETE (Int.Cl.7) |
|---|---|
| | G01N |

Der vorliegende Recherchenbericht wurde für alle Patentansprüche erstellt

| Recherchenort | Abschlußdatum der Recherche | Prüfer |
|---|---|---|
| DEN HAAG | 10. August 2001 | Kempf, G |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
    Dokument

EPO FORM 1503 03 82 (P04C03)

**ANHANG ZUM EUROPÄISCHEN RECHERCHENBERICHT**
**ÜBER DIE EUROPÄISCHE PATENTANMELDUNG NR.**

EP 01 10 6705

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4853634 | A | 01-08-1989 | SE | 456864 | B | 07-11-1988 |
| | | | | EP | 0257603 | A | 02-03-1988 |
| | | | | JP | 63061946 | A | 18-03-1988 |
| | | | | SE | 8603604 | A | 28-02-1988 |
| | | | | SE | 458312 | B | 13-03-1989 |
| | | | | SE | 8700359 | A | 28-02-1988 |
| GB | 2124772 | A | 22-02-1984 | DE | 3327571 | A | 09-02-1984 |
| | | | | FR | 2531537 | A | 10-02-1984 |
| | | | | IT | 1170175 | B | 03-06-1987 |
| | | | | JP | 59052748 | A | 27-03-1984 |
| | | | | SE | 8303776 | A | 04-02-1984 |
| US | 3544890 | A | 01-12-1970 | KEINE | | | |

EPO FORM P0461

Für nähere Einzelheiten zu diesem Anhang : siehe Amtsblatt des Europäischen Patentamts, Nr.12/82